Europäisches Patentamt

European Patent Office

Office européen des brevets

(19)

(11) **EP 0 959 087 B1**

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(51) Int Cl.⁷: **C08G 18/78**, C08G 18/70, C09D 175/04

(21) Anmeldenummer: **99109121.6**

(22) Anmeldetag: **08.05.1999**

(54) **Wasserdispergierbare Polyether-modifizierte Polyisocyanatgemische**

Water-dispersable polyether-modified mixtures of polyisocyanates

Polyisocyanates dispersables dans l'eau modifiés par un polyéther

(84) Benannte Vertragsstaaten:
**AT BE CH DE ES FR GB IT LI NL SE**

(30) Priorität: **22.05.1998 DE 19822891**
**14.10.1998 DE 19847077**

(43) Veröffentlichungstag der Anmeldung:
**24.11.1999 Patentblatt 1999/47**

(73) Patentinhaber: **Bayer Aktiengesellschaft**
**51368 Leverkusen (DE)**

(72) Erfinder:
• **Laas, Hans-Josef Dr.**
**50733 Köln (DE)**
• **Halpaap, Reinhard Dr.**
**51519 Odenthal (DE)**
• **Wamprecht, Christian Dr.**
**41472 Neuss (DE)**

(56) Entgegenhaltungen:
**EP-A- 0 524 500          EP-A- 0 802 210**
**EP-A- 0 835 889          US-A- 5 563 207**

**Beschreibung**

Die Erfindung betrifft Polyether-modifizierte, wasserdispergierbare Polyisocyanatgemische, ein Verfahren zu ihrer Herstellung und ihre Verwendung als Ausgangskomponente bei der Herstellung von Polyurethankunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Wasserdispergierbare Polyisocyanatgewinn für verschiedene Anwendungsgebiete zunehmend an Bedeutung.

Eine besondere Rolle spielen wasserdispergierbare Polyisocyanate als Vernetzerkomponenten für wasserverdünnbare Zweikomponenten-Polyurethan(2K-PUR)-Lacke. In Kombination mit wäßrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen (vgl. z.B. EP-A 358 979, EP-A 469 389, EP-A 496 210, EP-A 542 105, EP-A 543 228, EP-A 562 282, EP-A 562 436, EP-A 583 728, DE-A 41 29 951, DE-A 42 26 242, DE-A 42 26 243 oder DE-A 42 26 270).

Bedeutung besitzen wasserdispergierbare Polyisocyanatzubereitungen auch als Zusatzmittel z.B. für wäßrige Dispersionsklebstoffe. Mit ihrer Hilfe lassen sich beispielsweise die Wärmebeständigkeit und Wasserfestigkeit von Verklebungen unterschiedlicher Materialien erheblich verbessern (vgl. z. B. EP-A 61 628 und EP-A 206 059).

Wasserdispergierbare Polyisocyanate finden außerdem Verwendung als Vernetzerkomponenten für wäßrige Dispersionen in der Textilausrüstung (EP-A 560 161 oder WO 95/30045) oder in formaldehydfreien Textildruckfarben (EP-A 571 867 oder DE-A 195 33 218) und eignen sich darüber hinaus beispielsweise auch als Hilfsmittel zur Naßverfestigung von Papier (EP-A 564 912, EP-A 582 166, EP-A 707 113, WO 96/20309 und WO 97/04169).

In der Praxis haben sich für all diese Anwendungsgebiete nichtionische, mit Hilfe von Polyethern hydrophilmodifizierte Polyisocyanate durchgesetzt. Die Herstellung solcher wasserdispergierbaren Polyisocyanate ist in einer Reihe von Veröffentlichungen beschrieben.

Nach der Lehre der DE-A 24 15 435 stellen beispielsweise Urethane aus organischen, insbesondere aromatischen Polyisocyanaten und mindestens 5 Ethylenoxideinheiten aufweisenden Polyethylenglykolmonoalkylethern oberflächenaktive Substanzen dar, die nach der GB-PS 1 444 933 und der DE-A 29 08 844 die Herstellung stabiler wäßriger Emulsionen aromatischer Polyisocyanate ermöglichen.

Durch Umsetzung mit Alkylenoxidpolyethern hydrophil modifizierte aromatische Polyisocyanate sind auch aus den EP-A 61 628 und 95 594 bekannt. In Form wäßriger Emulsionen finden diese Produkte insbesondere im Klebstoffbereich Verwendung.

Wasserdispergierbare Zubereitungen (cyclo)aliphatischer Polyisocyanate sind z.B. aus der EP-A 206 059 bekannt. Sie enthalten als Emulgatoren Umsetzungsprodukte aus Polyisocyanaten mit ein- oder mehrwertigen Polyalkylenoxidalkoholen, bestehend aus mindestens einer, mindestens 10 Ethylenoxideinheiten aufweisenden Polyetherkette, und dienen ebenfalls als Zusatzmittel für wäßrige Klebstoffe.

Die EP-A 516 277 beschreibt die Hydrophilierung spezieller, tertiär gebundene Isocyanatgruppen aufweisender Polyisocyanate durch Umsetzung mit einwertigen Polyalkylenoxidpolyethern und die Verwendung dieser Produkte als Vemetzerkomponente für wäßrige Beschichtungsmittel.

Für hochwertige lichtechte Lackanwendungen haben sich insbesondere z.B. die in der EP-B 540 985 und der US-A 5 200 489 beschriebenen, durch Urethanisierung aliphatischer und/oder cycloaliphatischer Lackpolyisocyanate mit kurzkettigen, im statistischen Mittel weniger als 10 Ethylenoxideinheiten aufweisenden Polyethylenoxidpolyetheralkoholen erhältlichen Polyisocyanatgemische bewährt.

Auch die aus der EP-A 645 410 und EP-A 680 983 als Vernetzer für wäßrige Holzund Möbellacke bekannten wasserdispergierbaren Polyisocyanate auf Basis von 2,4(6)-Diisocyanatotoluol (TDI) bzw. Gemischen aus TDI und 1,6-Diisocyanatohexan (HDI) enthalten als hydrophile Bestandteile Urethane aus Polyisocyanat und monofunktionellen Polyethylenoxidpolyetheralkoholen.

Neben diesen rein nichtionisch hydrophilierten, Polyetherurethane enthaltenden Polyisocyanaten sind auch Polyether-modifizierte wasserdispergierbare Polyisocyanate bekannt, die zur Verbesserung der Emulgierbarkeit oder zur Erzielung spezieller Effekte zusätzlich noch ionische Gruppen, beispielsweise Sulfonatgruppen (vgl. z.B. EP 703 255) oder Amino- bzw. Ammoniumgruppen (vgl. z. B. EP-A 582 166 und EP-A 707 113), aufweisen. Solche ionisch/ nichtionisch-modifizierte Polyisocyanate sind für Lackanwendungen in der Regel weniger geeignet. Sie kommen vorzugsweise in der umweltfreundlichen Textilausrüstung bzw. als Papiernaßfestmittel zum Einsatz.

Trotz ihrer breit gefächerten Anwendungen weisen die Polyetherurethan-modifizierten wasserdispergierbaren Polyisocyanate des Standes der Technik eine Reihe prinzipieller Nachteile auf. So lassen sich die wasserdispergierbaren Polyisocyanate, die unter Verwendung höhermolekularer Polyetheralkohole (beispielsweise im Falle reiner Polyethylenoxidpolyether bereits ab einem mittleren Molekulargewicht von ca. 700) hergestellt wurden, aufgrund eines sehr hohen während der Dispergierung zu überwindenden Viskositätsmaximums oftmals nur unter Anwendung erheblicher Scherkräfte (z.B. Hochgeschwindigkeitsrührer) homogen in wäßrige Medien einarbeiten. Zudem neigen solche Produkte, insbesondere bei hohen Emulgatorgehalten, wie sie zum Erreichen besonders feinteiliger, sedimentationsstabiler Dispersionen erforderlich sind, häufig zum Kristallisieren.

Unter Verwendung kürzerer Polyetherketten lassen sich hingegen wasserdispergierbare Polyisocyanate erhalten, die sich sehr leicht bereits von Hand zu stabilen Dispersionen in Wasser einrühren lassen und selbst bei hohen Hydrophilierungsgraden, d. h. bei hohen Gehalten an Ethylenoxideinheiten, keinerlei Kristallisationstendenz zeigen. Aufgrund des relativ niedrigen Molekulargewichtes der zur Modifizierung eingesetzten Polyalkylenoxidpolyether nehmen dabei allerdings mit steigendem Hydrophilierungsgrad sowohl der Gehalt an Isocyanatgruppen als auch die mittlere Isocyanatfunktionalität stetig ab. In der Praxis sind aber für die Mehrzahl der obengenannten Anwendungsgebiete, beispielsweise als Vernetzerkomponenten für Lacke und Beschichtungen, gerade hochhydrophilierte besonders feinteilig zu emulgierende Polyisocyanate mit hohen NCO-Gehalten und möglichst hoher Funktionalität erwünscht.

Aufgabe der vorliegenden Erfindung war es daher, neue wasserdispergierbare Polyisocyanatgemische zur Verfügung zu stellen, die für den Einsatz in den obengenannten Anwendungsgebieten hydrophiler Polyisocyanate, insbesondere als Ausgangskomponenten zur Herstellung von Polyurethankunststoffen und vor allem als Vernetzer für wäßrige Bindemittel oder Bindemittelkomponenten in Beschichtungssystemen geeignet sind, ohne mit den genannten Nachteilen der wasserdispergierbaren Polyisocyanate des Standes der Technik behaftet zu sein.

Diese Aufgabe konnte mit den erfindungsgemäßen Polyisocyanatgemischen bzw. des Verfahrens zu ihrer Herstellung gelöst werden. Die erfindungsgemäßen Polyisocyanatgemische basieren auf der überraschenden Beobachtung, daß die Umsetzung monomerenarmer, aus mindestens zwei Diisocyanatmolekülen bestehender Polyisocyanate mit monofunktionellen Polyethylenoxidpolyetheralkoholen unter Allophanatisierungsbedingungen wasserdispergierbare Polyisocyanatgemische liefert, die sich bereits bei deutlich niedrigeren Hydrophilierungsgraden erheblich leichter und feinteiliger in wäßrige Systeme einrühren lassen als unter Verwendung baugleicher Polyetheralkohole hergestellte wasserdispergierbare Polyisocyanate des Standes der Technik, bei denen die Polyetherketten über Urethanbindungen mit dem Polyisocyanat verknüpft sind.

Das erfindungsgemäße Verfahren gestattet die Herstellung kristallisationsstabiler hydrophiler Polyisocyanate, die sich gegenüber den bisher bekannten, Polyetherketten enthaltenden Polyisocyanatgemischen bei gleicher oder sogar besserer Wasserdispergierbarkeit durch einen höheren Gehalt an Isocyanatgruppen und eine höhere Funktionalität auszeichnen.

Obwohl in einigen Veröffentlichungen, die die Herstellung Allophanatgruppen enthaltender Polyisocyanate zum Gegenstand haben, beispielsweise in der EP-A 000 194, EP-A 303 150, EP-A 682 012, US-PS 5 380 792 oder US-PS 5 086 175, als mögliche alkoholische Ausgangsverbindungen zur Herstellung solcher Produkte auch die üblichen Polyetheralkohole genannt werden und daneben in der EP-A 000 194, EP-A 303 150 und EP-A 682 012 innerhalb langer Listen geeigneter Ausgangsisocyanate auch Polyisocyanate einer Funktionalität > 2, wie z. B. Trimerisierungsprodukte von HDI oder 1-Isocyanato-3,3,5-trimethyl-5-isocyanatomethylcyclohexan (IPDI), pauschal erwähnt werden, konnte der Fachmann keiner der obengenannten Veröffentlichungen irgendeinen konkreten Hinweis darauf entnehmen, daß sich unter Allophanatisierungsbedingungen hergestellte Umsetzungsprodukte monomerenarmer Polyisocyanate mit monofunktionellen Polyethylenoxidpolyetheralkoholen erheblich leichter und feinteiliger zu stabilen Emulsionen in Wasser einrühren lassen als Polyisocyanatgemische gleicher Bruttozusammensetzung, die nach den bekannten Verfahren des Standes der Technik unter Urethanisierung hergestellt wurden.

Gegenstand der vorliegenden Erfindung sind wasserdispergierbare Polyisocyanatgemische auf Basis aliphatischer, cycloaliphatischer, araliphatischer und/oder aromatischer Diisocyanate mit

a) einer mittleren Isocyanatfunktionalität von mindestens 2,0,

b) einem Gehalt an Isocyanatgruppen (berechnet als NCO; Molekulargewicht = 42) von 5,0 bis 25,0 Gew.-% und

c) einem Gehalt an innerhalb von Polyetherketten gebundenen Ethylenoxideinheiten (berechnet als $C_2H_4O$; Molekulargewicht = 44) von 2 bis 50 Gew.-%, wobei die Polyetherketten im statistischen Mittel 5 bis 35 Ethylenoxideinheiten enthalten,

dadurch gekennzeichnet, daß die Polyetherketten zu mindestens 60 mol-% über Allophanatgruppen mit jeweils zwei, jeweils aus mindestens zwei Diisocyanaten aufgebauten Polyisocyanatmolekülen verknüpft sind.

Gegenstand der Erfindung ist auch ein Verfahren zur Herstellung dieser wasserdispergierbaren Polyisocyanatgemische, dadurch gekennzeichnet, daß man

A) eine Polyisocyanatkomponente einer (mittleren) NCO-Funktionalität von 2,0 bis 5,0, mit einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% mit

B) einem einwertigen, im statistischen Mittel von 5 bis 35 Ethylenoxideinheiten aufweisenden Polyalkylenoxidpolyetheralkohol

unter Einhaltung eines NCO/OHNCO/OH-Äquivalentverhältnisses von 6 : 1 bis 400 : 1 so miteinander umsetzt, daß mindestens 60 % der durch NCO/OH-Reaktion primär gebildeten Urethangruppen zu Allophanatgruppen weiterreagieren, wobei die Mengenverhältnisse der genannten Ausgangsverbindungen so gewählt werden, daß die resultierenden Umsetzungsprodukte den oben unter a) bis c) genannten Bedingungen entsprechen.

Gegenstand der Erfindung ist auch die Verwendung dieser Polyisocyanatgemische als Ausgangskomponenten bei der Herstellung von Polyurethankunststoffen.

Gegenstand ist schließlich auch die Verwendung dieser Polyisocyanatgemische als Vernetzer für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% auf. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente A) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereiches 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und ,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norboman, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Ausgangskomponenten A) um Polyisocyanate oder Polyisocyanatgemische der genannten Art mit ausschließlich aliphatisch und/oder cycloaliphatisch gebundenen Isocyanatgruppen.

Ganz besonders bevorzugte Ausgangskomponenten A) sind Polyisocyanate bzw. Polyisocyanatgemische mit Isocyanuratstruktur auf Basis von HDI, IPDI und/oder 4,4'-Diisocyanatodicyclohexylmethan.

Bei der Komponente B) handelt es sich um einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38) oder beliebige Gemischer solcher Polyetheralkohole.

Als geeignete Startermoleküle zur Herstellung der beim erfindungsgemäßen Verfahren eingesetzten Polyetheralkohole B) seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocylische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte Ausgangskomponenten B) für das erfindungsgemäße Verfahren sind reine Polyethylenglycolmonomethyletheralkohole, die im statistischen Mittel 7 bis 30, ganz besonders bevorzugt 7 bis 25 Ethylenoxideinheiten aufweisen.

Gegebenenfalls können beim erfindungsgemäßen Verfahren zusätzlich zu den genannten Polyetheralkoholen B) in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten mitverwendet werden.

Zur Durchführung des erfindungsgemäßen Verfahrens werden die Ausgangskomponenten A) und B) bei Temperaturen von 40 bis 180°C, vorzugsweise 50 bis 150°C, unter Einhaltung eines NCO-/OH-Äquivalent-Verhältnisses von 6:1 bis 400:1, vorzugsweise von 8:1 bis 140:1, so miteinander umgesetzt, daß mindestens 60 mol-%, vorzugsweise mindestens 80 mol-%, besonders bevorzugt mindestens 90 mol-% der durch NCO/OH-Reaktion primär gebildeten Urethangruppen zu Allophanatgruppen weiterreagieren.

Zur Beschleunigung der Allophanatisierungsreaktion können beim erfindungsgemäßen Verfahren gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine der in der GB-A 994 890 beschriebenen Art, um Alkylierungsmittel der in der US-A 3 769 318 beschriebenen Art oder um starke Säuren, wie sie in der EP-A 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichiorid, Dibutylzinndiacetat, Dibutylzinndilaurat, Dibutylzinndimaleat oder Dioctylzinndiacetat, Aluminium-tri(ethylaceto-acetat), Eisen-(III)-chlorid, Kaliumoctoat, Mangan- Cobalt- oder Nickelverbindungen sowie starke Säuren, wie z.B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A 649 866 Seite 4, Zeile 7 bis Seite 5, Zeile 15 beschrieben.

Bevorzugte Katalysatoren für das erfindungsgemäße Verfahren sind Zinkverbindungen der obengenannten Art. Ganz besonders bevorzugt ist die Verwendung Zink-(II)-n-octanoat, Zink-(II)-2-ethyl 1-hexanoat und/oder Zink-(II)-stearat.

Diese Katalysatoren kommen beim erfindungsgemäßen Verfahren gegebenenfalls in einer Menge von 0,001 bis 5 Gew.-%, vorzugsweise 0,005 bis 1 Gew.-%, bezogen auf das Gesamtgewicht der Reaktionspartner, zum Einsatz.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente A) und/oder der Polyetherkomponente B) vor Beginn der eigentlichen Umsetzung zuzumischen. Ebenso ist es möglich, den Katalysator dem Reaktionsgemisch zu einem beliebigen Zeitpunkt während der Urethanisierungsreaktion oder im Sinne einer zweistufigen Reaktionsführung auch im Anschluß an die Urethanisierung, d. h. wenn der einem vollständigen Umsatz von Isocyanat- und Hydroxylgruppen theoretisch entsprechende NCO-Gehalt erreicht ist, zuzusetzen.

Der Verlauf der Umsetzung kann beim ertindungsgemäßen Verfahren durch z. B. titrimetrische Bestimmung des NCO-Gehaltes verfolgt werden. Nach Erreichen des angestrebten NCO-Gehaltes, vorzugsweise wenn das molare Verhältnis von Allophanatgruppen zu Urethangruppen im Reaktionsgemisch mindestens 4 : 1, besonders bevorzugt mindestens 9 : 1, beträgt, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Im übrigen werden beim erfindungsgemäßen Verfahren die Mengenverhältnisse der Ausgangskomponenten im Rahmen der gemachten Angaben so gewählt, daß die resultierenden Polyisocyanatgemische den oben unter a) bis c) gemachten Angaben entsprechen, wobei a) die mittlere NCO-Funktionalität vorzugsweise 2,3 bis 9,9, besonders bevorzugt 2,8 bis 5,8, b) der NCO-Gehalt vorzugsweise 6,0 bis 22,5 Gew.-%, besonders bevorzugt 8,5 bis 21,5 Gew.-% und c) der Gehalt an innerhalb von Polyetherketten gebundenen Ethylenoxideinheiten vorzugsweise 5 bis 40 Gew.-%, besonders bevorzugt 7 bis 25 Gew.-% beträgt.

Die gemachten Angaben bezüglich der NCO-Funktionalität der erfindungsgemäßen Verfahrensprodukte beziehen sich dabei auf den Wert, der sich rechnerisch aus Art und Funktionalität der Ausgangskomponenten nach der Formel

$$F = \frac{\sum \text{val NCO} \; - \; \sum (1 + x) \cdot \text{mol OH}}{\sum \left( \dfrac{\text{val NCO}}{f_{NCO}} \right) \; + \; \sum \text{mol OH} \; - \; \sum (1 + x) \cdot \text{mol OH}}$$

bestimmen läßt, in welcher x den Anteil der beim erfindungsgemäßen Verfahren zu Allophanatgruppen umgesetzten Urethangruppen bedeutet. Die Funktionalität $f_{NCO}$ der Ausgangspolyisocyanate A) läßt sich aus dem NCO-Gehalt und dem beispielsweise durch Gelpermeationschromatographie (GPC) oder Dampfdruckosmose bestimmten Molekulargewicht errechnen.

Das erfindungsgemäße Verfahren kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha®, Solvesso® , Shellsol®, Isopar®, Nappar® und Diasol® im Handel sind, Kohlensäureester, wie Dimethylcarbonat, Diethylcarbonat, 1,2-Ethylenearbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die erfindungsgemäßen Verfahrensprodukte stellen klare, praktisch farblose Polyisocyanatgemische dar, die sich leicht, ohne Einsatz hoher Scherkräfte durch bloßes Einrühren in Wasser dispergieren lassen, wobei zum Erhalten sedimentationsstabiler wäßriger Dispersionen bei einer vorgegebenen Zusammensetzung und Molekulargewichtsverteilung der Polyethersegmente bereits ein erheblich niedriger Gesamtgehalt an Ethylenoxideinheiten ausreicht, als im Falle von wasserdispergierbaren Polyisocyanatgemischen des Standes der Technik, die durch Urethanisierung mit Polyetheralkoholen der gleichen Zusammensetzung und Molekulargewichtsverteilung hergestellt wurden. Das erfindungsgemäße Verfahren gestattet so die Herstellung kristallisationsstabiler hochhydrophiler Polyisocyanate, die sich gegenüber den bisher bekannten, Polyetherurethane enthaltenden Polyisocyanatgemischen bei gleicher oder sogar besserer Wasserdispergierbarkeit durch einen höheren Gehalt an Isocyanatgruppen und eine höhere Funktionalität auszeichnen.

Die hervorragende Dispergierbarkeit bereits bei niedrigen Ethylenoxidgchalten in Verbindung mit hohen NCO-Gehalten und -Funktionalitäten stellt insbesondere für die Verwendung der erfindungsgemäßen Polyisocyanatgemische in wäßrigen 2K-PUR-Lacken einen Vorteil dar, da sich auf diese Weise hochvernetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen.

Gegebenenfalls können die erfindungsgemäßen Polyisocyanatgemische vor der Emulgierung mit weiteren nichthydrophilierten Polyisocyanaten, insbesondere Lackpolyisocyanaten der obengenannten Art, versetzt werden. Dabei werden die Mengenverhältnisse bevorzugt so gewählt, daß die dann resultierenden Polyisocyanatgemische den vorstehend unter a) bis c) genannten Bedingungen entsprechen und somit ebenfalls erfindungsgemäße Polyisocyanatgemische darstellen, da diese im allgemeinen aus Gemischen aus

(i) erfindungsgemäß hydrophil modifizierten Polyisocyanaten und

(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Hierzu werden die Polyisocyanatgemische vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wäßrige Lackbindemittel werden die erfindungsgemäßen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1, entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung, zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

### Beispiele

Der Begriff "Allophanatisierungsgrad" bezeichnet im folgenden den aus dem NCO-Gehalt errechenbaren prozentualen Anteil der zu Allophanatgruppen umgesetzten, aus Polyetheralkohol und Polyisocyanat entstandenen Urethangruppen. Alle übrigen Prozentangaben beziehen sich auf das Gewicht.

### Beispiel 1

900 g (4,65 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden bei 100°C unter trockenem Stickstoff und Rühren vorgelegt, innerhalb von 30 min mit 100 g (0,29 val) eines auf Methanol gestarteten, monofunktionellen Polyethylenoxidpolyethers eines mittleren Molekulargewichtes von 350, entsprechend einem NCO/OH-Äquivalentverhältnis von 16 : 1, versetzt und anschließend bei dieser Temperatur weitergerührt, bis der NCO-Gehalt der Mischung nach etwa 2 h auf den einer vollständigen Urethanisierung entsprechenden Wert von 18,3 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 106°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| | |
|---|---|
| Festgehalt | 100 % |
| NCO-Gehalt | 17,2 % |
| NCO-Funktionalität | 3,9 |
| Viskosität (23°C) | 3200 mPas |
| Ethylenoxidgehalt | 9,1 % |
| Allophanatisierungsgrad | 92 % |

**Beispiel 2**

870 g (4,81 val) eines Isocyanuratgruppen -haltigen Polyisocyanates auf Basis von HDI mit einem NCO-Gehalt von 23,2 %, einer mittleren NCO-Funktionalität von 3,2 (nach GPC), einem Gehalt an monomerem HDI von 0,2 % und einer Viskosität von 1200 mPas (23°C) werden bei 100°C unter trockenem Stickstoff und Rühren vorgelegt, innerhalb von 30 min mit 130 g (0,26 val) eines auf Methanol gestarteten, monofunktionellen Polyethylenoxidpolyethers eines mittleren Molekulargewichtes von 500, entsprechend einem NCO/OHNCO/OH-Äquivalentverhältnis von 18,5 : 1, versetzt und anschließend bei dieser Temperatur weitergerührt, bis der NCO-Gehalt der Mischung nach etwa 2 h auf den einer vollständigen Urethanisierung entsprechenden Wert von 19,1 % gefallen ist. Durch Zugabe von 0,01 g Zink-(II)-2 -ethyl-1-hexanoat wird die Allophanatisierungsreaktion gestartet. Dabei steigt die Temperatur des Reaktionsgemisches aufgrund der freiwerdenden Reaktionswärme -bis auf 109°C an. Nach Abklingen der Exothermie, etwa 20 min nach Katalysatorzugabe, wird die Reaktion durch Zugabe von 0,01 g Benzoylchlorid abgebrochen und das Reaktionsgemisch auf Raumtemperatur abgekühlt. Es liegt ein erfindungsgemäßes, farbloses klares Polyisocyanatgemisch mit folgenden Kenndaten vor:

| | |
|---|---|
| Festgehalt | 100 % |
| NCO-Gehalt | 18,0 % |
| NCO-Funktionalität | 3,5 |
| Viskosität (23°C) | 1400 mPas |
| Ethylenoxidgehalt | 12,2 % |
| Allophanatisierungsgrad | 100 % |

**Beispiel 3**

890 g (2,52 val) eines 70 %ig in Butylacetat gelöst vorliegenden Isocyanuratgruppen-haltigen Polyisocyantes auf Basis von 1-Isocyanato-3,3,5-trimethyl-5-isocyanatomethylcyclohexan (IPDI) mit einem NCO-Gehalt von 11,9 %, einer mittleren NCO-Funktionalität von 3,3 (nach GPC), einem Gehalt an monomerem IPDI von 0,2 % und einer Viskosität von 650 mPas (23°C) werden zusammen mit weiteren 47,1 g Butylacetat bei 100°C unter trockenem Stickstoff und Rühren vorgelegt, innerhalb von 30 min mit 110 g (0,22 val) eines auf Methanol gestarteten, monofunktionellen Polyethylenoxidpolyethers eines mittleren Molekulargewichtes von 500, entsprechend einem NCO/OHNCO/OH-Äquivalentverhältnis von 11,5 : 1, versetzt und anschließend bei dieser Temperatur weitergerührt, bis der NCO-Gehalt der Mischung nach etwa 2,5 h auf den einer vollständigen Urethanisierung entsprechenden Wert von 9,7 % gefallen ist. Durch Zugabe von 0,02 g Zink-(II)-stearat wird die Allophanatisierungsreaktion gestartet. Dabei steigt die Temperatur des Reaktionsgemisches aufgrund der freiwerdenden Reaktionswärme bis auf 105°C an. Nach Abklingen der Exothermie, etwa 1 h nach Katalysatorzugabe, wird die Reaktion durch Zugabe von 0,01 g Benzoylchlorid abgebrochen und das Reaktionsgemisch auf Raumtemperatur abgekühlt. Es liegt eine klare farblose Lösung eines erfindungsgemäßen Polyisocyanatgemisches mit folgenden Kenndaten vor:

| | |
|---|---|
| Festgehalt | 70 % |
| NCO-Gehalt | 8,9 % |
| NCO-Funktionalität | 3,8 |
| Viskosität (23°C) | 700 mPas |

(fortgesetzt)

| | |
|---|---|
| Ethylenoxidgehalt | 9,8 % |
| Allophanatisierungsgrad | 80 % |

## Beispiel 4

850 g (2,00 val) eines 60 %ig in Butylacetat gelöst vorliegenden Isocyanuratgruppen-haltigen Polyisocyantes mit aromatisch und aliphatisch gebundenen NCO-Gruppen auf der Basis von 2,4- bzw. 2,6-Diisocyanatotoluol (TDI) und HDI im Verhältnis von 2 : 1 mit einem NCO-Gehalt von 9,9 %, einer mittleren NCO-Funktionalität von 4,5 (nach GPC), einem Gesamtgehalt an monomeren Diisocyanaten (TDI und HDI) von 0,2 % und einer Viskosität von 2400 mPas (23°C) werden zusammen mit weiteren 46,7 g Butylacetat bei 100°C unter trockenem Stickstoff und Rühren vorgelegt, innerhalb von 30 min mit 70 g (0,14 val) eines auf Methanol gestarteten, monofunktionellen Polyethylenoxidpolyethers eines mittleren Molekulargewichtes von 500, entsprechend einem NCO/OHNCO/OH-Äquivalentverhältnis von 14,3 : 1, versetzt und anschließend bei dieser Temperatur weitergerührt, bis der NCO-Gehalt der Mischung nach etwa 1 h auf den einer vollständigen Urethanisierung entsprechenden Wert von 8,1 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 109°C an. Nach Abklingen der Exothermie, etwa 20 min nach Katalysatorzugabe, wird die Reaktion durch Zugabe von 0,01 g Benzoylchlorid abgebrochen und das Reaktionsgemisch auf Raumtemperatur abgekühlt. Es liegt eine klare farblose Lösung eines erfindungsgemäßen Polyisocyanatgemisches mit folgenden Kenndaten vor:

| | |
|---|---|
| Festgehalt | 60 % |
| NCO-Gehalt | 7,6 % |
| NCO-Funktionalität | 5,6 |
| Viskosität (23°C) | 2600 mPas |
| Ethylenoxidgehalt | 6,8 % |
| Allophanatisierungsgrad | 83 % |

## Beispiel 5 (Vergleich, analog EP-B 540 985, Ausführungsbeispiele)

900 g (4,65 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 100 g (0,29 val) des in Beispiel 1 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 18,3 % gefallen ist. Nach Abkühlen auf Raumtemperatur liegt ein farbloses, klares Polyisocyanatgemisch mit folgenden Kenndaten vor:

| | |
|---|---|
| Festgehalt | 100 % |
| NCO-Gehalt | 18,3 % |
| NCO-Funktionalität | 3,3 |
| Viskosität (23°C) | 3100 mPas |
| Ethylenoxidgehalt | 9,1 % |
| Allophanatisierungsgrad | 0 % |

## Beispiel 6 (Vergleich, analog EP-B 540 985, Ausführungsbeispiele)

860 g (4,44 val) des in Beispiel 1 beschriebenen Isocyanuratgruppen-haltigen Polyisocyanates auf Basis von HDI werden bei 100°C unter trockenem Stickstoff und Rühren vorgelegt, innerhalb von 30 min mit 140 g (0,40 val) des in Beispiel 1 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 16,8 % gefallen ist. Nach Abkühlen auf Raumtemperatur liegt ein farbloses, klares Polyisocyanatgemisch mit folgenden Kenndaten vor:

| | |
|---|---|
| Festgehalt | 100 % |
| NCO-Gehalt | 16,8 % |
| NCO-Funktionalität | 3,2 |

(fortgesetzt)

| Viskosität (23°C) | 3200 mPas |
|---|---|
| Ethylenoxidgehalt | 12,7 % |
| Allophanatisierungsgrad | 0 % |

**Beispiel 7** (Herstellung von Emulsionen)

75 g des erfindungsgemäßen Polyisocyanatgemisches aus Beispiel 1 werden in einem Erlenmeyerkolben mit 175 g entionisiertem Wasser versetzt und durch leichtes Rühren von Hand in eine feinteilige, blaustichige Emulsion überführt. Die Emulsion ist nach einer Standzeit von 24 h noch stabil und zeigt keinerlei Ausfällungen oder Bodensatz.

Zum Vergleich werden 75 g des Polyisocyanatgemisches aus Beispiel 5 in einem Erlenmeyerkolben mit 175 g entionisiertem Wasser versetzt und 5 min auf dem Magnetrührer mit 900 U/min gerührt. Dabei entsteht trotz Anwendung höherer Scherkräfte lediglich eine sehr grobteilige, nur wenig stabile Emulsion, in der sich bereits nach einer Standzeit von 2 h ein dicker weißer Bodensatz gebildet hat.

Der Vergleich zeigt, daß das erfindungsgemäß hergestellte Polyisocyanatgemisch aus Beispiel 1 gegenüber einem gemäß der Lehre der EP-B 540 985 hergestellten Polyisocyanatgemisch gleicher Bruttozusammensetzung, bei dem die Polyetherketten ausschließlich über Urethanbindungen mit dem Polyisocyanat verknüpft sind, eine deutlich bessere Dispergierbarkeit und gleichzeitig eine höhere NCO-Funktionalität aufweist.

**Beispiel 8** (erfindungsgemäße Verwendung)

100 Gew.-Teile einer wäßrigen, Colöser-freien, hydroxyfunktionellen Polyacrylatdispersion mit einem Festkörpergehalt von 43 % und einem OH-Gehalt von 2,5 %, bezogen auf Festharz, im wesentlichen bestehend aus 48,0 % Methylmethacrylat, 27,4% n-Butylacrylat, 21,6 % Hydroxy-$C_3$-alkylmethacrylat (Anlagerungsprodukt von Propylenoxid an Methacrylsäure) und 3,0 % Acrylsäure, werden mit 0,5 Gew.-Teilen eines handelsüblichen Entschäumers (Foamaster TCX, Henkel) gemischt. Die Zubereitung ist unbegrenzt lagerstabil.

Dem obengenannten Ansatz setzt man 15,5 Gew.-Teile des erfindungsgemäßen Polyisocyanates aus Beispiel 1 zu (entsprechend einem Äquivalentverhältnis von Isocyanatgruppen zu alkoholischen Hydroxylgruppen von 1 : 1) und homogenisiert durch intensives Rühren (2000 U/min). Anschließend wird der Festkörpergehalt durch Zugabe von Wasser auf 40 % eingestellt.

Die Verarbeitungszeit des applikationsfertigen, also gemischten, Ansatzes beträgt ca. 3 Stunden. Der in einer Naßfilm-Schichtdicke von 150 µm (ca. 60 µm trocken) aufgetragene Film erscheint direkt nach dem Auftrag nahezu transparent mit leicht gelblichem Schimmer (Tyndall-Effekt). Bei Raumtemperatur beträgt die Zeit bis zur Staubtrocknung weniger als 30 min, bis zur Drucktrocknung ca. 1 bis 1,5 Stunden. Ein zweiter gleicher Filmaufzug wurde unter forcierten Bedingungen (30 min / 60°C) getrocknet. Man erhält jeweils einen hochglänzenden, völlig klaren und transparenten Lackfilm mit den folgenden Eigenschaften:

| Trocknung bei | RT (23°C) | 60°C |
|---|---|---|
| Optik (Glanz/Transparenz) | sehr gut / sehr gut | sehr gut / sehr gut |
| Pendeldämpfung nach 1 d / 7 d | 57 s / 137 s | 99 s / 144 s |
| Lösemittelbeständigkeit [a] Wasser (30 Min.) | 0 | 0 |
| Isopropanol/Wasser 1:1(1 Min.) | 0 | 0 |
| MPA/Xylol 1:1 (1 Min.) | 0 | 0 |
| Butylglykol (1 Min.) | 0 | 0 |
| Aceton (1 Min.) | 1 | 0 |

[a] Bewertung: 0 -5 (0 = Lackfilm unverändert; 5 = völlig aufgelöst)

Zum Vergleich wird aus 100 Gew.-Teilen der oben beschriebenen hydroxyfunktionellen Polyacrylatdispersion und 15,8 Gew.-Teilen des Polyisocyanates gemäß EP-B 540 985 aus Beispiel 6 (entsprechend einem Äquivalentverhältnis von Isocyanatgruppen zu alkoholischen Hydroxylgruppen von 1 : 1) nach dem oben beschriebenen Verfahren ein Lack hergestellt.

Die Verarbeitungszeit des applikationsfertigen Ansatzes beträgt ca. 3 Stunden. Der in einer Naßfilm-Schichtdicke von 150 µm (ca. 60 µm trocken) aufgetragene Film erscheint direkt nach dem Auftrag milchig-weiß. Bei Raumtemperatur beträgt die Zeit bis zur Staubtrocknung ca. 1 Stunde, bis zur Drucktrocknung ca. 2 bis 3 Stunden. Ein analog hergestellter Filmaufzug wurde unter forcierten Bedingungen (30 min / 60°C) getrocknet. In beiden Fällen erhält man leicht trübe Lackfilme mit folgenden Eigenschaften:

| Trocknung bei | \| RT (23°C) | 60°C |
|---|---|---|
| Optik (Glanz/Transparenz) | mäßig / schlecht | mäßig / schlecht |
| Pendeldämpfung nach 1 d / 7 d | 44 s /121 s | 72 s / 123 s |
| Lösemittelbeständigkeit[a] | | |
| Wasser (30 Min.) | 2 | 2 |
| Isopropanol/Wasser 1:1(1 Min.) | 2 | 2 |
| MPA/Xylol 1:1(1 Min.) | 3 | 2 |
| Butylglykol (1 Min.) | 2 | 2 |
| Aceton (1 Min.) | 4 | 3 |

a) Bewertung: 0 - 5 (0 = Lackfilm unverändert; 5 = völlig aufgelöst)

Der Vergleich zeigt, daß das erfindungsgemäß hergestellte Polyisocyanat aus Beispiel 1 mit einem niedrigeren Gehalt an hydrophilen Ethylenoxideinheiten eine bessere Dispergierbarkeit aufweist als ein aus den gleichen Rohstoffen hergestelltes wasserdispergierbares Polyisocyanat des Standes der Technik (Beispiel 6) und infolgedessen völlig transparente Lackfilme liefert. Aufgrund des höheren NCO-Gehaltes und insbesondere der höheren Funktionalität des erfindungsgemäßen Polyisocyanates zeigen die damit erhaltenen Lackfilme darüberhinaus eine erheblich höhere Lösemittel- und Wasserbeständigkeit.

**Beispiel 9** (erfindungsgemäße Verwendung)

100 Gew.-Teile einer wäßrigen, Colöser-freien hydroxyfunktionellen Polyacrylatdispersion mit einem Festkörpergehalt von 44 % und einem OH-Gehalt von 3,0 %, bezogen auf Festharz, im wesentlichen bestehend aus 44,9 % Methylmethacrylat, 26,1 % n-Butylacrylat, 25,9 % Hydroxy-$C_3$-alkylmethacrylat (Anlagerungsprodukt von Propylenoxid an Methacrylsäure und 3,1 % Acrylsäure, werden mit 0,5 Gew.-Teile eines handelsüblichen Entschäumers (Foamaster TCX, Henkel) gemischt. Die Zubereitung ist unbegrenzt lagerstabil.

Dem obengenannten Ansatz setzt man 22,7 Gew.-Teile einer 80 %igen Lösung des erfindungsgemäßen Polyisocyanates aus Beispiel 2 in Dipropylenglykoldimethylether zu (entsprechend einem Äquivalentverhältnis von Isocyanatgruppen zu alkoholischen Hydroxylgruppen von 1: 1) und homogenisiert durch intensives Rühren (2000 U/min). Anschließend wird durch Zugabe von Wasser ein Festkörpergehalt von 40 Gew.-% eingestellt.

Die Verarbeitungszeit des applikationsfertigen, also gemischten, Ansatzes beträgt ca. 3 Stunden. Der in einer Naßfilm-Schichtdicke von 150 μm (ca. 60 μm trocken) aufgetragene Film erscheint direkt nach dem Auftrag nahezu transparent mit leicht gelblichem Schimmer (Tyndall-Effekt). Bei Raumtemperatur beträgt die Zeit bis zur Staubtrocknung ca. 1 Stunde, bis zur Drucktrocknung ca. 2 bis 3 Stunden. Ein zweiter gleicher Filmaufzug wurde unter forcierten Bedingungen (30 min/60°C) getrocknet. In beiden Fällenerhält man einen hochglänzenden, völlig klaren und transparenten Lackfilm mit folgenden Eigenschaften:

| Trocknung bei | RT(23°C) | 60°C |
|---|---|---|
| Optik (Glanz/Transparenz) | sehr gut / sehr gut | sehr gut / sehr gut |
| Pendeldämpfung nach 1 d / 7 d | 88 s / 144 s | 118 s / 157 s |
| Lösemittelbeständigkeit[a] | | |
| Wasser (30 Min.) | 0 | 0 |
| Isopropanol/Wasser 1:1(1 Min.) | 0 | 0 |
| MPA/Xylol 1:1 (1 Min.) | 0 | 0 |
| Butylglykol (1 Min.) | 0 | 0 |
| Aceton (1 Min.) | 1 | 0 |

a) Bewertung: 0 -5 (0 = Lackfilm unverändert; 5 = völlig aufgelöst)

**Patentansprüche**

1. Wasserdispergierbare Polyisocyanatgemische auf Basis aliphatischer, cycloaliphatischer, araliphatischer und/ oder aromatischer Diisocyanate mit

   a) einer mittleren Isocyanatfunktionalität von mindestens 2,0
   b) einem Gehalt an Isocyanatgruppen (berechnet als NCO; Molekulargewicht = 42) von 5,0 bis 25,0 Gew.-% und
   c) einem Gehalt an innerhalb von Polyetherketten gebundenen Ethylenoxideinheiten (berechnet als $C_2H_4O$; Molekulargewicht = 44) von 2 bis 50 Gew.-%, wobei die Polyetherketten im statistischen Mittel 5 bis 35 Ethylenoxideinheiten enthalten,

   **dadurch gekennzeichnet, daß** die Polyetherketten zu mindestens 60 mol-% über Allophanatgruppen mit jeweils zwei, jeweils aus mindestens zwei Diisocyanaten aufgebauten Polyisocyanatmolekülen verknüpft sind.

2. Wasserdispergierbare Polyisocyanatgemische auf Basis aliphatischer und/oder cycloaliphatischer Diisocyanate mit

   a) einer mittleren Isocyanatfunktionalität von 2,3 bis 9,9,
   b) einem Gehalt an Isocyanatgruppen (berechnet als NCO; Molekulargewicht = 42) von 6,0 bis 22,5 Gew.-% und
   c) einem Gehalt an innerhalb von Polyetherketten gebundenen Ethylenoxideinheiten (berechnet als $C_2H_4O$; Molekulargewicht = 44) von 5 bis 40 Gew.-%, wobei die Polyetherketten im statistischen Mittel 7 bis 30 Ethylenoxideinheiten enthalten,

   **dadurch gekennzeichnet, daß** die Polyetherketten zu mehr als 60 mol-% über Allophanatgruppen mit jeweils zwei, jeweils aus mindestens zwei Diisocyanaten aufgebauten Polyisocyanatmolekülen verknüpft sind.

3. Wasserdispergierbare Polyisocyanatgemische gemäß Anspruch 1, **dadurch gekennzeichnet, daß** die Polyetherketten zu mehr als 60 mol-% über Allophanatgruppen mit jeweils zwei Isocyanuratgruppen aufweisenden Polyisocyanatmolekülen verknüpft sind.

4. Wasserdispergierbare Polyisocyanatgemische gemäß Anspruch 1, **dadurch gekennzeichnet, daß** die Polyetherketten zu mehr als 80 mol-% über Allophanatgruppen mit jeweils zwei Isocyanuratgruppen aufweisenden Polyisocyanatmolekülen mit ausschließlich aliphatisch und/oder cycloaliphatisch gebundenen Isocyanatgruppen verknüpft sind.

5. Verfahren zur Herstellung von wasserdispergierbaren Polyisocyanatgemischen gemäß Anspruch 1, **dadurch gekennzeichnet, daß** man

   A) eine Polyisocyanatkomponente einer mittleren Funktionalität von 2,0 bis 5,0, mit einem Gehalt an aliphatisch, cycloaliphatisch, araliphatisch und/oder aromatisch gebundenen Isocyanatgruppen (berechnet als NCO; Molekulargewicht = 42) von 8,0 bis 27,0 Gew.-% und einem Gehalt an monomeren Diisocyanaten von weniger als 1 Gew.-% mit

   B) einem einwertigen, im statistischen Mitel von 5 bis 35 Ethylenoxideinheiten aufweisenden Polyalkylenoxidpolyetheralkohol

   unter Einhaltung eines NCO/OHNCO/OH-Äquivalentverhältnisses von 6 : 1 bis 400 : 1 so miteinander umsetzt, daß mindestens 60 % der durch NCO/OH-Reaktion primär gebildeten Urethangruppen zu Allophanatgruppen weiterreagieren, wobei die Mengenverhältnisse der genannten Ausgangsverbindungen so gewählt werden, daß die resultierenden Umsetzungsprodukte den in Anspruch 1 unter a) bis c) genannten Bedingungen entsprechen.

6. Verfahren gemäß Anspruch 5, **dadurch gekennzeichnet, daß** man

   A) eine Polyisocyanatkomponente einer mittleren Funktionalität von 2,3 bis 4,5, mit einem Gehalt an aliphatisch und/oder cycloaliphatisch gebundenen Isocyanatgruppen (berechnet als NCO; Molekulargewicht = 42) von 14,0 bis 24,0 Gew.-% und einem Gehalt an monomeren Diisocyanaten von weniger als 0,5 Gew.-% mit

B) einem einwertigen, im statistischen Mittel von 7 bis 30 Ethylenoxideinheiten aufweisenden Polyalkylenoxidpolyetheralkohol

unter Einhaltung eines NCO/OHNCO/OH-Äquivalentverhältnisses von 8 : 1 bis 140 : 1 so miteinander umsetzt, daß mindestens 60 % der durch NCO/OH-Reaktion primär gebildeten Urethangruppen zu Allophanatgruppen weiterreagieren, wobei die Mengenverhältnisse der genannten Ausgangsverbindungen so gewählt werden, daß die resultierenden Umsetzungsprodukte den in Anspruch 2 unter a) bis c) genannten Bedingungen entsprechen.

7. Verfahren gemäß Anspruch 5, **dadurch gekennzeichnet, daß** man als Polyisocyanatkomponente A) ein Isocyanuratgruppen aufweisendes Polyisocyanat auf Basis von 1,6-Diisocyanatohexan, 1-Isocyanato-3,3,5-trimethyl-5-isocyanatomethylcyclohexan und/oder 4,4'-Diisocyanatodicyclohexylmethan einsetzt.

8. Verfahren gemäß Anspruch 5, **dadurch gekennzeichnet, daß** man die Umsetzung in Gegenwart eines die Bildung von Allophanatgruppen beschleunigenden Katalysators durchführt.

9. Verfahren gemäß Anspruch 8, **dadurch gekennzeichnet, daß** man als Allophanatisierungskatalysator organische Zinkverbindungen einsetzt.

10. Verfahren gemäß Anspruch 8, **dadurch gekennzeichnet, daß** man als Allophanatisierungskatalysator Zink-(II)-n-octoat, Zink-(II)-2-ethyl-1-hexanoat und/oder Zink-(II)-stearat einsetzt.

11. Verwendung der Polyisocyanatgemische gemäß Anspruch 1 als Ausgangskomponente bei der Herstellung von Polyurethankunststoffen.

12. Verwendung der Polyisocyanatgemische gemäß Anspruch 1 zur Herstellung von Überzügen.

13. Verwendung der Polyisocyanatgemische gemäß Anspruch 1 als Vemetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

**Claims**

1. Water-dispersible polyisocyanate mixtures based on aliphatic, cycloaliphatic, araliphatic and/or aromatic diisocyanates and having

   a) an average isocyanate functionality of at least 2.0
   b) an isocyanate group content (calculated as NCO; molecular weight = 42) of 5.0 to 25.0 wt. % and
   c) an amount of ethylene oxide units (calculated as $C_2H_4O$; molecular weight = 44) incorporated within polyether chains of 2 to 50 wt. %, the polyether chains containing an average of 5 to 35 ethylene oxide units,

   **characterized in that** at least 60 mole % of the polyether chains are connected via allophanate groups to in each case two polyisocyanate molecules which are each prepared from at least two diisocyanates.

2. Water-dispersible polyisocyanate mixtures based on aliphatic and/or cycloaliphatic diisocyanates and having

   a) an average isocyanate functionality of 2.3 to 9.9,
   b) an isocyanate group content (calculated as NCO; molecular weight = 42) of 6.0 to 22.5 wt. % and
   c) an amount of ethylene oxide units (calculated as $C_2H_4O$; molecular weight = 44) incorporated within polyether chains of 5 to 40 wt. %, the polyether chains containing an average of 7 to 30 ethylene oxide units,

   **characterized in that** more than 60 mole % of the polyether chains are connected via allophanate groups to in each case two polyisocyanate molecules which are each prepared from at least two diisocyanates.

3. Water-dispersible polyisocyanate mixtures according to Claim 1, **characterized in that** more than 60 mole % of the polyether chains are connected via allophanate groups to polyisocyanate molecules each containing two isocyanurate groups.

**EP 0 959 087 B1**

4. Water-dispersible polyisocyanate mixtures according to Claim 1, **characterized in that** more than 80 mole % of the polyether chains are connected via allophanate groups to polyisocyanate molecules containing in each case two isocyanurate groups and exclusively aliphatically and/or cycloaliphatically bound isocyanate groups.

5. Process for the preparation of water-dispersible polyisocyanate mixtures according to Claim 1, **characterized in that**

A) a polyisocyanate component with an average functionality of 2.0 to 5.0, containing 8.0 to 27.0 wt. % of aliphatically, cycloaliphatically, araliphatically and/or aromatically bound isocyanate groups (calculated as NCO; molecular weight = 42) and less than 1 wt. % of monomeric diisocyanates is reacted with

B) a monofunctional polyalkylene oxide polyether alcohol containing an average of 5 to 35 ethylene oxide units

at an NCO/OH equivalent ratio of 6:1 to 400:1 such that at least 60% of the urethane groups initially formed by the NCO/OH reaction react further to allophanate groups, the proportions of the stated starting compounds being chosen so that the resultant reaction products meet the conditions specified in Claim 1 under a) to c).

6. Process according to Claim 5, **characterized in that**

A) a polyisocyanate component with an average functionality of 2.3 to 4.5, containing 14.0 to 24.0 wt. % of aliphatically and/or cycloaliphatically bound isocyanate groups (calculated as NCO; molecular weight = 42) and less than 0.5 wt. % of monomeric diisocyanates is reacted with

B) a monofunctional polyalkylene oxide polyether alcohol containing an average of 7 to 30 ethylene oxide units

at an NCO/OH equivalent ratio of 8:1 to 140:1 such that at least 60% of the urethane groups initially formed by the NCO/OH reaction react further to allophanate groups, the proportions of the stated starting compounds being chosen so that the resultant reaction products meet the conditions specified in Claim 2 under a) to c).

7. Process according to Claim 5, **characterized in that** polyisocyanate component A) comprises a polyisocyanate which contains isocyanurate groups and is based on 1,6-diisocyanatohexane, 1-isocyanato-3,3,5-trimethyl-5-isocyanatomethylcyclohexane and/or 4,4'-diisocyanatodicyclohexylmethane.

8. Process according to Claim 5, **characterized in that** the reaction is conducted in the presence of a catalyst which accelerates the formation of allophanate groups.

9. Process according to Claim 8, **characterized in that** organic zinc compounds are used as allophanatization catalyst.

10. Process according to Claim 8, **characterized in that** the allophanatization catalyst used comprises zinc(II) n-octoate, zinc(II) 2-ethyl-1-hexanoate and/or zinc(II) stearate.

11. Use of the polyisocyanate mixtures according to Claim 1 as a starting component in the production of polyurethane plastics.

12. Use of the polyisocyanate mixtures according to Claim 1 for producing coatings.

13. Use of the polyisocyanate mixtures according to Claim I as a crosslinker component for water-soluble or water-dispersible paint binders or paint binder components in the production of coatings using aqueous coating compositions based on such binders or binder components.

**Revendications**

1. Mélanges de polyisocyanates, dispersibles dans l'eau, à base de diisocyanates aliphatiques, cycloaliphatiques, araliphatiques et/ou aromatiques, avec

a) une fonctionnalité isocyanate moyenne d'au moins 2,0 ;

14

b) une teneur en radicaux isocyanate (calculée comme NCO ; poids moléculaire = 42) allant de 5,0 à 25,0% en poids, et

c) une teneur en unités oxyde d'éthylène liées au sein des chaines polyéther (calculée comme $C_2H_4O$ , poids moléculaire = 44) allant de 2 à 50% en poids, où les chaines polyéther contiennent, en moyenne statistique, 5 à 35 unités oxyde d'éthylène,

**caractérisés en ce que** les chaines polyéther sont reliées pour au moins 60% en moles par des radicaux allophanate avec chaque fois, deux molécules de polyisocyanate élaborées chaque fois à partir d'au moins deux diisocyanates.

2. Mélanges de polyisocyanates, dispersibles dans l'eau, à base de diisocyanates aliphatiques, et/ou cycloaliphatiques, avec

a) une fonctionnalité isocyanate moyenne allant de 2,3 à 9,9 ;

b) une teneur en radicaux isocyanate (calculée comme NCO ; poids moléculaire = 42) allant de 6,0 à 22,5% en poids, et

c) une teneur en unités oxyde d'éthylène liées au sein des chaines polyéther (calculée comme $C_2H_4O$ ; poids moléculaire = 44) allant de 5 à 40% en poids, où les chaines polyéther contiennent, en moyenne statistique, 7 à 30 unités oxyde d'éthylène,

**caractérisés en ce que** les chaines polyécher sont reliées pour plus de 60% en moles par des radicaux allophanate avec chaque fois, deux molécules de polyisocyanate élaborées chaque fois à partir d'au moins deux diisocyanates.

3. Mélanges de polyisocyanates, dispersibles dans l'eau, suivant la revendication 1, **caractérisés en ce que** les chaines polyéther sont reliées pour plus de 60% en moles par des radicaux allophanate avec des molécules de polyisocyanate présentant chaque fois, deux radicaux isocyanurate.

4. Mélanges de polyisocyanates, dispersibles dans l'eau, suivant la revendication 1, **caractérisés en. ce que** les chaines polyéther sont reliées pour plus de 80% en moles par des radicaux allophanate avec des molécules de polyisocyanate présentant chaque fois, deux radicaux isocyanurate, avec des radicaux isocyanate reliés exclusivement de manière aliphatique et/ou cycloaliphatique.

5. Procédé de préparation de mélanges de polyisocyanates, dispersibles dans l'eau, suivant la revendication 1, **caractérisé en ce que** l'on fait réagir l'un avec l'autre .

A) un composant polyisocyanate de fonctionnalité moyenne allant de 2,0 à 5,0, avec une teneur en radicaux isocyanate liés de manière aliphatique, cycloaliphatique, araliphatique et/ou aromatique (calculée comme NCO ; poids moléculaire = 42) allant de 8,0 à 27,0% en poids, et une teneur en diisocyanates monomères inférieure à 1% en poids, avec

B) un poly(oxyde d'alcoylène)-polyétheralcool monovalent, présentant une moyenne statistique de 5 à 35 unités oxyde d'éthylène,

en maintenant un rapport des équivalents NCO/OH allant de 6:1 à 400:1, de sorte qu'au moins 60% des radicaux uréthanne formés de manière primaire par la réaction NCO/OH réagissent en radicaux allophanate, où les rapports quantitatifs des composés de départ indiqués sont choisis de sorte que les produits de réaction résultants correspondent aux conditions a) à c) de la revendication 1.

6. Procédé suivant la revendication 5, **caractérisé en ce que** l'on fait réagir l'un avec l'autre :

A) un composant polyisocyanate de fonctionnalité moyenne allant de 2,3 à 4,5, avec une teneur en radicaux isocyanate liés de manière aliphatique et/ou cycloaliphatique (calculée comme NCO ; poids moléculaire = 42) allant de 14,0 à 24,0% en poids, et une teneur en diisocyanates monomères inférieure à 0,5% en poids, avec

B) un poly(oxyde d'alcoylène)-polyétheralcool monovalent, présentant une moyenne statistique de 7 à 30 unités oxyde d'éthylène,

en maintenant un rapport des équivalents NCO/OH allant de 8:1 à 140:1, de sorte qu'au moins 60% des radicaux uréthanne formés de manière primaire par la réaction NCO/OH réagissent en radicaux allophanate, où les rapports quantitatifs des composés de départ indiqués sont choisis de sorte que les produits de réaction résultants correspondent aux conditions a) à c) de la revendication 2.

7. Procédé suivant la revendication 5, **caractérisé en ce que** l'on met en oeuvre comme composant polyisocyanate A), un polyisocyanate présentant des radicaux isocyanurate à base de 1,6-diisocyanatohexane, de 1-isocyanato-3,3,5-triméthyl-S-isocyanatométhylcyclohexane et/ou de 4,4'-diisocyanatocyclohexylméthane.

8. Procédé suivant la revendication 5, **caractérisé en ce que** l'on réalise la réaction en présence d'un catalyseur accélérant la formation des radicaux allophanate.

9. Procédé suivant la revendication 8, **caractérisé en ce que** l'on met en oeuvre comme catalyseur d'allophanatisation, des composés organiques du zinc.

10. Procédé suivant la revendication 8, **caractérisé en ce que** l'on met en oeuvre comme catalyseur d'allophanatisation, le n-octoate de zinc (II), le 2-éthyl-1-hexanoate de zinc (II) et/ou le stéarate de zinc (II).

11. Utilisation du mélange de polyisocyanates suivant la revendication 1, comme composant de départ pour la préparation de matières plastiques en polyuréthanne.

12. Utilisation du mélange de polyisocyanates suivant la revendication 1, comme composant de départ pour la préparation d'enduits.

13. Utilisation du mélange de polyisocyanates suivant la revendication 1, comme composant de réticulation pour les liants ou composants de liant de laque, vernis et peinture solubles ou dispersibles tans l'eau, lors de la préparation d'enduits en utilisant des agents de revêtements aqueux à base de tels liants ou composants de liant.